# EUROPÄISCHE PATENTSCHRIFT

(11) **EP 2 791 470 B1**
(45) Veröffentlichungstag und Bekanntmachung des Hinweises auf die Patenterteilung: **08.07.2020**
(21) Anmeldenummer: 12816447.2
(22) Anmeldetag: 29.11.2012
(51) Int. Cl.: F01C 19/00, F04C 15/00

(54) **DICHTEINRICHTUNG**
SEALING DEVICE
DISPOSITIF D'ÉTANCHÉITÉ

(30) Priorität: 14.12.2011 DE 102011056405
(43) Veröffentlichungstag der Anmeldung: 22.10.2014
(73) Patentinhaber: Hanon Systems EFP Deutschland GmbH, 61352 Bad Homburg v.d.Höhe (DE)
(72) Erfinder: MAUSER, Thilo, 61118 Bad Vilbel (DE); NÜTZEL, Andreas, 95466 Weidenberg (DE)
(74) Vertreter: Hoffmann Eitle
(86) Internationale Anmeldenummer: PCT/DE2012/100361
(87) Internationale Veröffentlichungsnummer: WO 2013/087068

(56) Entgegenhaltungen:
- CN-Y- 201 202 813
- DE-A1- 2 521 049
- US-A- 3 659 503
- US-A- 3 873 249
- US-A- 3 990 819
- US-A1- 2007 189 913

## Beschreibung

Die Erfindung betrifft eine Dichteinrichtung mit einem relativ formstabilen länglichen Reib- und/oder Verschleißelement und mit einem elastisch verformbaren länglichen Dichtelement, das der Länge nach an dem Reib- und/oder Verschleißelement anliegt. Die Erfindung betrifft des Weiteren ein Reib- und/oder Verschleißelement für eine derartige Dichteinrichtung. Die Erfindung betrifft des Weiteren einen Hubring mit einer Nut, in der eine derartige Dichteinrichtung angeordnet ist. Die Erfindung betrifft darüber hinaus eine Verstellpumpe mit einem Hubring, der bewegbar ist, um den Hub der Verstellpumpe zu verstellen und der eine Nut aufweist, und mit einem Stützring.

Das Dichtelement ist zum Beispiel als O-Ring-Schnur ausgeführt und hat neben seiner Dichtfunktion die Aufgabe, das längliche Reib- und/oder Verschleißelement dichtend in Anlage an einer Gegenfläche zu halten. Das Reib- und/oder Verschleißelement ist zum Beispiel aus einem Flourelastomer gebildet. Die Dichteinrichtung wird bevorzugt zur Abdichtung eines Dichtspaltes zwischen einem verstellbaren Hubring und einem Stützring einer Verstellpumpe verwendet, wie sie zum Beispiel aus der europäischen Patentanmeldung EP 1 801 419 A2 bekannt ist.

Aus der US 3 990 919 B1 ist eine Dichteinrichtung bekannt mit einem formstabilen länglichen Reib- und/oder Verschleißelement und einem elastischen verformbaren länglichen Dichtelement, das der Länge nach an dem Reibund/oder Verschleißelement anliegt, wobei das Reib- und/oder Verschleißelement mit seinen Enden das Dichtelement umgreift.

US 2007 0 189 913 A1 zeigt eine Dichtanordnung mit einem u-förmigen Profil der Dichtung in einem Rotor.

Aus der CN 2008 200 65570 U1 ist eine Dichtkombination für einen Flügel bekannt, die ein Dichtelement zwischen zwei Gleitelementschichten umfasst.

Aufgabe der Erfindung ist es, eine Dichteinrichtung mit einem relativ formstabilen länglichen Reib- und/oder Verschleißelement und mit einem elastisch verformbaren länglichen Dichtelement, das der Länge nach an dem Reib- und/oder Verschleißelement anliegt, zu schaffen, durch die eine im eingebauten Zustand der Dichteinrichtung auftretende Leckage minimiert werden kann und/oder die einfach montierbar ist.

Die Aufgabe ist bei einer Dichteinrichtung mit einem relativ formstabilen länglichen Reib- und/oder Verschleißelement und mit einem elastisch verformbaren länglichen Dichtelement, das der Länge nach an dem Reib- und/oder Verschleißelement anliegt, dadurch gelöst, dass das Reib- und/oder Verschleißelement mit seinen Enden das Dichtelement umgreift. Dadurch wird auf einfache Art und Weise erreicht, dass das Dichtelement an seinen Enden im eingebauten Zustand der Dichteinrichtung keinen Kontakt mit Gegenflächen hat, relativ zu denen sich die Dichteinrichteinrichtung im Betrieb bewegt. Darüber hinaus wird durch die erfindungsgemäße Gestaltung des Reib- und/oder Verschleißelements eine präzisere Führung des Reib- und/oder Verschleißelements im eingebauten Zustand der Dichteinrichtung ermöglicht. Im eingebauten Zustand ist die Dichteinrichtung vorzugsweise so in einer Längsnut angeordnet, dass das Reib- und/oder Verschleißelement quer zur Längsausdehnung der Dichteinrichtung etwas aus der Längsnut herausragt.

Ein bevorzugtes Ausführungsbeispiel der Dichteinrichtung ist dadurch gekennzeichnet, dass das Reib- und/oder Verschleißelement im Wesentlichen u-förmig mit einer Basis ausgeführt ist, von der zwei Schenkel abgewinkelt sind. Dabei ist die Basis der u-förmigen Gestalt des Reib- und/oder Verschleißelements deutlich länger als die davon abgewinkelten Schenkel.

Ein weiteres bevorzugtes Ausführungsbeispiel der Dichteinrichtung ist. durch die Merkmale des Anspruchs 1 gekennzeichnet. Dabei werden die Dichtelementenden jedoch nicht vollständig von den abgewinkelten Enden des Reib- und/oder Verschleißelements umgriffen.

Ein weiteres bevorzugtes Ausführungsbeispiel der Dichteinrichtung ist dadurch gekennzeichnet, dass der längliche Grundkörper einen rechteckigen Querschnitt aufweist. Der Querschnitt des länglichen Grundkörpers ist vorzugsweise an die Nutweite einer Längsnut angepasst, in welcher die Dichteinrichtung im eingebauten Zustand angeordnet wird. Als Nutweite oder Nutbreite wird der Abstand von zwei Nutflanken der Längsnut bezeichnet.

Ein weiteres bevorzugtes Ausführungsbeispiel der Dichteinrichtung ist dadurch gekennzeichnet, dass die abgewinkelten Enden jeweils einen rechteckigen Querschnitt aufweisen. Der rechteckige Querschnitt der abgewinkelten Enden ist vorzugsweise an die Nutweite einer Längsnut angepasst, in welcher die Dichteinrichtung im eingebauten Zustand angeordnet wird. Als Nutweite oder Nutbreite wird der Abstand von zwei Nutflanken der Längsnut bezeichnet.

Ein weiteres bevorzugtes Ausführungsbeispiel der Dichteinrichtung ist dadurch gekennzeichnet, dass die Enden des Reib- und/oder Verschleißelements jeweils in einem rechten Winkel von dem länglichen Grundkörper abgewinkelt sind. Bei Bedarf können die abgewinkelten Enden des Reib- und/oder Verschleißelements auch geringfügig abgeschrägt sein, wodurch die Stellung gegebenenfalls vereinfacht wird.

Ein weiteres bevorzugtes Ausführungsbeispiel der Dichteinrichtung ist dadurch gekennzeichnet, dass das Dichtelement verliersicher mit dem Reib- und/oder Verschleißelement verbunden ist. Dadurch werden die Handhabung und der Einbau der Dichteinrichtung erheblich vereinfacht.

Ein weiteres bevorzugtes Ausführungsbeispiel der Dichteinrichtung ist dadurch gekennzeichnet, dass das Dichtelement mit seinen Enden an den abgewinkelten Enden des Reib- und/oder Verschleißelements anliegt. Die Dichtelementenden liegen vorzugsweise flächig an den abgewinkelten Enden des Reib- und/oder Verschleißelements an.

Die Erfindung ist ferner dadurch gekennzeichnet, dass das Dichtelement in Längsrichtung gegen das Reib- und/oder Verschleißelement vorgespannt ist. Durch die Vorspannung kann das Dichtelement auf einfache Art und Weise verliersicher an dem Reib- und/oder Verschleißelement gehalten werden.

Ein weiteres bevorzugtes Ausführungsbeispiel der Dichteinrichtung ist dadurch gekennzeichnet, dass das Dichtelement an seinen Enden stoffschlüssig und/oder formschlüssig mit dem Reib- und/oder Verschleißelement verbunden ist. Das Dichtelement kann zum Beispiel durch Anvulkanisieren an dem Reib- und/oder Verschleißelement befestigt sein. Besonders vorteilhaft ist die Dichteinrichtung mit dem Dicht- element und dem Reib- und/oder Verschleißelement als Mehrkomponenten-Spritzgussteil ausgeführt.

Ein weiteres bevorzugtes Ausführungsbeispiel der Dichteinrichtung ist dadurch gekennzeichnet, dass das Reib- und/oder Verschleißelement als Dichtleiste ausgeführt ist. Die Dichtleiste ist vorzugsweise aus einem Fluorelastomer gebildet.

Ein weiteres bevorzugtes Ausführungsbeispiel der Dichteinrichtung ist dadurch gekennzeichnet, dass das Dichtelement als O-Ring-Schnur ausgeführt ist. Das Dichtelement ist vorzugsweise aus dem gleichen oder einem ähnlichen Material hergestellt wie herkömmliche O-Ringe.

Die Erfindung betrifft des Weiteren ein Reib- und/oder Verschleißelement für eine vorab beschriebene Dichteinrichtung.

Die Erfindung betrifft des Weiteren einen Hubring mit einer Nut, in der eine vorab beschriebene Dichteinrichtung angeordnet ist. Die Nut ist vorzugsweise als Längsnut mit einem rechteckigen Querschnitt ausgeführt.

Bei einer Verstellpumpe mit einem Hubring, der bewegbar ist, um den Hub der Verstellpumpe zu verstellen und der eine Nut aufweist, und mit einem Stützring, ist die vorab angegebene Aufgabe alternativ oder zusätzlich dadurch gelöst, dass in der Nut eine vorab beschriebene Dichteinrichtung so angeordnet ist, dass das Reibund/oder Verschleißelement durch eine Vorspannung des elastisch verformbaren Dichtelements in Anlage an dem Stützring gehalten wird. Das Reib- und/oder Verschleißelement stellt eine hohe Abriebfestigkeit der Dichteinrichtung sicher. Das elastisch verformbare Dichtelement ermöglicht eine Aufrechterhaltung der Dichtwirkung der Dichteinrichtung auch dann, wenn sich der Hubring relativ zu dem Stützring beim Verstellen der Verstellpumpe bewegt. Besonders vorteilhaft können mit der erfindungsgemäßen Dichteinrichtung veränderlich Dichtspalte zwischen dem Hubring und dem Stützring abgedichtet werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 zwei Gehäuseteile mit einer Dichteinrichtung im Querschnitt;
Figur 2 eine perspektivische Darstellung der Dichteinrichtung aus Figur 1;
Figur 3 eine perspektivische Darstellung eines erfindungsgemäßen Reib- und/oder Verschleißelements;
Figur 4 eine perspektivische Darstellung einer Dichteinrichtung mit dem Reibund/oder Verschleißelement aus Figur 3 und
Figur 5 eine ausschnittsweise Explosionsdarstellung eines Hubrings einer Verstellpumpe mit der Dichteinrichtung aus Figur 4.

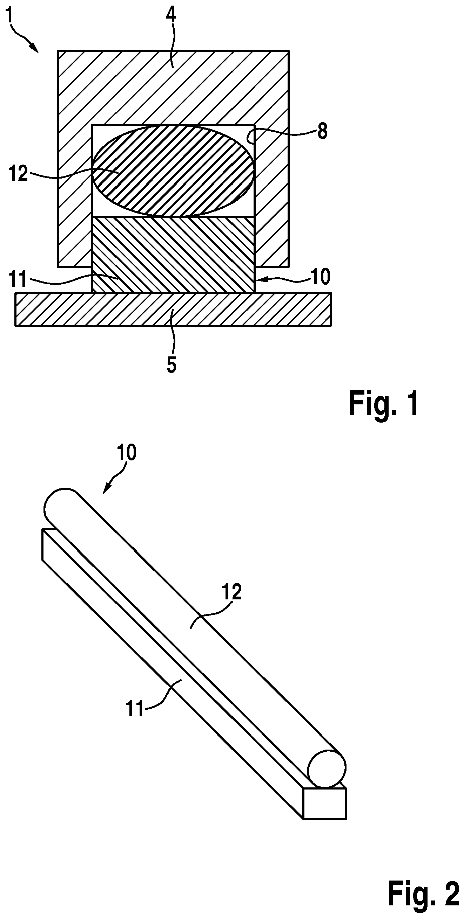

In Figur 1 ist eine technische Vorrichtung 1 mit einem ersten Gehäuseteil 4 und einem zweiten Gehäuseteil 5 stark vereinfacht im Querschnitt dargestellt. Das zweite Gehäuseteil 5 hat die Gestalt einer ebenen Platte, die geringfügig von dem ersten Gehäuseteil 4 beabstandet ist. Das erste Gehäuseteil 4 umfasst eine Längsnut 8, in der eine Dichteinrichtung 10 teilweise aufgenommen ist.

Die in Figur 2 perspektivisch dargestellte Dichteinrichtung 10 umfasst ein Reibund/oder Verschleißelement 1 1 aus einem relativ formstabilen Material, insbesondere einem Fluorelastomer. Das Reib- und/oder Verschleißelement 1 1 hat einen rechteckigen Querschnitt. Das Dichtelement 12 ist als O-Ring-Schnur mit einem kreisrunden Querschnitt ausgeführt und elastisch verformbar.

Im eingebauten Zustand der Dichteinrichtung 10 in Figur 1 sieht man, dass das Dichtelement 12 elastisch verformt ist, wodurch sich eine Vorspannkraft ergibt, durch die das Reib- und/oder Verschleißelennent 1 1 in dichter Anlage an dem zweiten Gehäuseteil 5 gehalten wird.

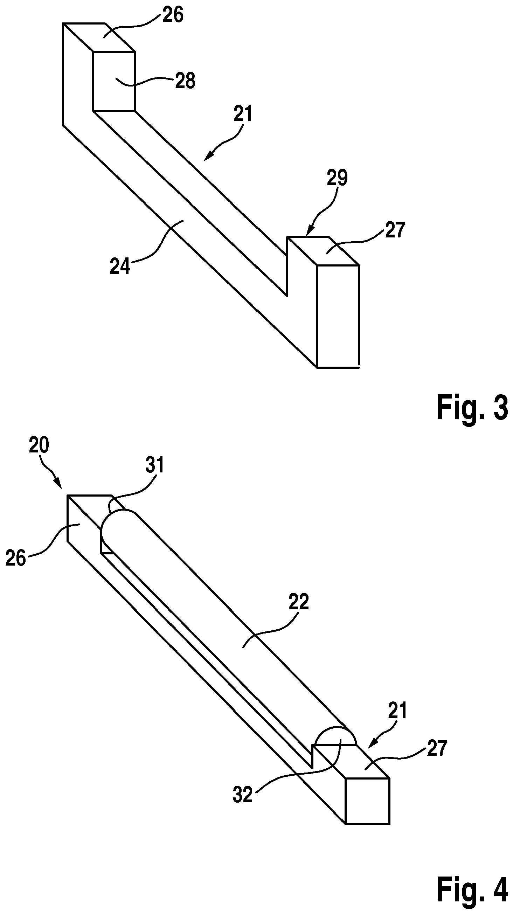

In Figur 3 ist ein erfindungsgemäßes Reib- und/oder Verschleißelennent 21 perspektivisch dargestellt. Das Reib- und/oder Verschleißelennent 21 hat einen länglichen Grundkörper 24 mit einem rechteckigen Querschnitt. Der längliche Grundkörper 24 weist zwei abgewinkelte Enden 26, 27 auf, die jeweils in einem rechten Winkel von dem länglichen Grundkörper 24 abgewinkelt sind.

Die abgewinkelten Enden 26, 27 haben ebenfalls einen rechteckigen Querschnitt. Die zwei einander zugewandten Innenflächen 28, 29 der abgewinkelten Enden 26, 27 des länglichen Grundkörpers 24 stellen Anlageflächen für ein Dichtelement dar.

In Figur 4 ist das Reib- und/oder Verschleißelement 21 mit einem Dichtelement 22 dargestellt. Das Dichtelement 22 stellt zusammen mit dem Reib- und/oder Verschleißelement 21 eine erfindungsgemäße Dichteinrichtung 20 dar. Das Dichtelement 22 ist als O-Ring-Schnur mit einem kreisrunden Querschnitt ausgeführt. Mit seinen Enden 31, 32 liegt das Dichtelement 22 teilweise an den Innenflächen 28, 29 der abgewinkelten Enden 26, 27 des Reib- und/oder Verschleißelements 21 an. Die Dichteinrichtung 20 kann auch in die Längsnut 8 der Vorrichtung 1 aus Figur 1 eingesetzt werden.

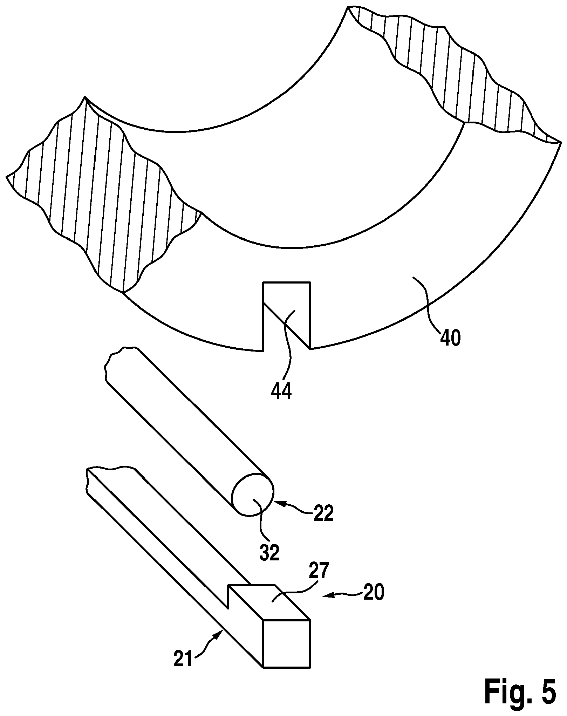

In Figur 5 ist ein Ausschnitt des Hubrings 40 einer Verstellpumpe perspektivisch dargestellt. Der Hubring 40 ist außen mit einer Längsnut 44 versehen, die zur Aufnahme der Dichteinrichtung 20 dient. Dabei wird die Dichteinrichtung 20 so in die Längsnut 44 eingesetzt, dass die abgewinkelten Enden des vollständig in den Figuren 3 und 4 dargestellten Reib- und/oder Verschleißelements 21 die Enden 32, 31 des Dichtelements 22 teilweise umgreift.

Die Verstellpumpe umfasst einen Hubring und einen Stützring. Der Hubring ist innerhalb des Stützrings, der auch als Distanzring bezeichnet wird, verstellbar angeordnet. Innerhalb des Hubrings wiederum ist ein Rotor zum Beispiel durch eine Antriebswelle angetrieben.

Bei der Verstellpumpe handelt es sich um eine Hydraulikpumpe, die als Flügelzellenpumpe ausgeführt ist. In dem Rotor sind radial verlaufende Schlitze vorgesehen, in denen Flügel in radialer Richtung geführt sind. Die Flügel liegen mit ihren radial äußeren Enden an einer Hubkontur an, die innen an dem Hubring vorgesehen ist.

Wenn sich der Rotor dreht, dann kommt es im Bereich eines Saugraums zwischen dem Rotor und dem Hubring zu einer Volumenvergrößerung, die ein Ansaugen eines Hydraulikmediums über eine Ansaugöffnung bewirkt. Gleichzeitig kommt es in einem Druckbereich zwischen dem Rotor und dem Hubring zu einer Volumenabnahme, die ein Fördern des Hydraulikmediums in eine Druckniere bewirkt.

Die Fördermenge der Verstellpumpe kann variiert werden, indem der Hubring innerhalb des Stützrings oder Distanzrings relativ zu dem Rotor verstellt wird. Beim Verstellen führt der Hubring eine Schwenkbewegung um einen Drehbolzen aus, der in entsprechenden Vertiefungen zwischen dem Hubring und dem Stützring angeordnet ist.

Durch eine Feder, die in einer Ausnehmung angeordnet ist, ist der Hubring vorgespannt. Zwischen dem Hubring und dem Distanzring sind insgesamt drei Verstelldruckräume ausgebildet, die durch Dichteinrichtungen und den Drehbolzen gegeneinander abgedichtet sind. Bei den Dichteinrichtungen handelt es sich um die gleiche Dichteinrichtung, die in den Figuren 3 bis 5 dargestellt ist.

Die Dichteinrichtungen sind jeweils in einer Längsnut angeordnet, die in dem Hubring vorgesehen ist. Die Reib- und/oder Verschleißelemente der Dichteinrichtungen sind relativ formstabil und werden jeweils durch ein elastisch verformbares Dichtelement dichtend in Anlage an dem Stützring gehalten.

### Bezuqszeichenliste

- I: Vorrichtung
- 4: erstes Gehäuseteil
- 5: zweites Gehäuseteil
- 8: Längsnut
- 10: Dichteinrichtung
- 11: Reib- und/oder Verschleißelement
- 12: Dichtelement
- 20: Dichteinrichtung
- 21: Reib- und/oder Verschleißelement
- 22: Dichtelement
- 24: länglicher Grundkörper
- 26: Ende
- 27: Ende
- 28: Innenfläche
- 29: Innenfläche
- 31: Ende
- 32: Ende
- 40: Hubring
- 44: Längsnut

## Patentansprüche

1. Dichteinrichtung mit einem relativ formstabilen länglichen Reib- und/oder Verschleißelement (11;21) und mit einem elastisch verformbaren länglichen Dichtelement (12;22), das der Länge nach an dem Reib- und/oder Verschleißelement (11;21) anliegt, wobei das Reib- und/oder Verschleißelement (21) mit seinen Enden das Dichtelement (22) umgreift und u-förmig ausgeführt ist und dass die Enden (26,27) des Reib- und/oder Verschleißelements (21) jeweils in einem rechten Winkel von dem länglichen Grundkörper (24) abgewinkelt sind,
**dadurch gekennzeichnet, dass** das Dichtelement (22) mit seinen Enden (31, 32) an den abgewinkelten Enden (26, 27) des Reib- und/oder Verschleißelements (21) anliegt.

2. Dichteinrichtung nach Anspruch 1, **dadurch gekennzeichnet, dass** das Reibund/oder Verschleißelement (21) einen länglichen Grundkörper (24) mit zwei abgewinkelten Enden (26, 27) aufweist.

3. Dichteinrichtung nach Anspruch 2, **dadurch gekennzeichnet, dass** der längliche Grundkörper (24) einen im Wesentlichen rechteckigen Querschnitt aufweist.

4. Dichteinrichtung nach Anspruch 2 oder 3, **dadurch gekennzeichnet, dass** die abgewinkelten Enden (26, 27) jeweils einen im Wesentlichen rechteckigen Querschnitt aufweisen.

5. Dichteinrichtung nach einem der vorhergehenden Ansprüche, **dadurch gekennzeichnet, dass** das Dichtelement (22) verliersicher mit dem Reib- und/oder Verschleißelement (21) verbunden ist.

6. Dichteinrichtung nach einem der vorhergehenden Ansprüche, **dadurch gekennzeichnet, dass** das Dichtelement (22) in Längsrichtung gegen das Reibund/oder Verschleißelement (21) vorgespannt ist.

7. Dichteinrichtung nach einem der vorhergehenden Ansprüche, **dadurch gekennzeichnet, dass** das Dichtelement (22) an seinen Enden stoffschlüssig und/oder formschlüssig mit dem Reib- und/oder Verschleißelement (21) verbunden ist.

8. Dichteinrichtung nach einem der vorhergehenden Ansprüche, **dadurch gekennzeichnet, dass** das Reib- und/oder Verschleißelement (21) als Dichtleiste ausgeführt ist.

9. Dichteinrichtung nach einem der vorhergehenden Ansprüche, **dadurch gekennzeichnet, dass** das Dichtelement (22) als O-Ring-Schnur ausgeführt ist.

10. Reib- und/oder Verschleißelement für eine Dichteinrichtung (20) nach einem der vorhergehenden Ansprüche.

11. Hubring (40) mit einer Nut (44), in der eine Dichteinrichtung (20) nach einem der Ansprüche 1 bis 9 angeordnet ist.

12. Verstellpumpe mit einem Hubring, der bewegbar ist, um den Hub der Verstellpumpe zu verstellen und der eine Nut aufweist, und mit einem Stützring, **dadurch gekennzeichnet, dass** in der Nut eine Dichteinrichtung nach einem der Ansprüche 1 bis 9 so angeordnet ist, dass das Reib- und/oder Verschleißelement (21) durch eine Vorspannung des elastisch verformbaren Dichtelements (22) in Anlage an dem Stützring gehalten wird.

## Claims

1. Sealing device having a relatively dimensionally stable elongate friction and/or wear element (11; 21) and having an elastically deformable elongate sealing element (12; 22), which rests lengthwise against the friction and/or wear element (11; 21), the friction and/or wear element (21) engaging with the ends thereof around the sealing element (22) and being u-shaped and the ends (26, 27) of the friction and/or wear element (21) in each case being at a right angle to the elongate main body (24),
**characterised in that** the sealing element (22) rests with the ends (31, 32) thereof against the angled ends (26, 27) of the friction and/or wear element (21).

2. Sealing device according to claim 1, **characterised in that** the friction and/or wear element (21) comprises an elongate main body (24) having two angled ends (26, 27) .

3. Sealing device according to claim 2, **characterised in that** the elongate main body (24) has a substantially rectangular cross-section.

4. Sealing device according to claim 2 or 3, **characterised in that** the angled ends (26, 27) in each case have a substantially rectangular cross-section.

5. Sealing device according to any of the preceding claims, **characterised in that** the sealing element (22) is captively connected to the friction and/or wear element (21) .

6. Sealing device according to any of the preceding claims, **characterised in that** the sealing element (22) is preloaded in the longitudinal direction against the friction and/or wear element (21).

7. Sealing device according to any of the preceding claims, **characterised in that** the sealing element (22) is connected at the ends thereof to the friction and/or wear element (21) in a bonded and/or interlocking manner.

8. Sealing device according to any of the preceding claims, **characterised in that** the friction and/or wear element (21) is designed as a sealing strip.

9. Sealing device according to any of the preceding claims, **characterised in that** the sealing element (22) is designed as an O-ring cord.

10. Friction and/or wear element for a sealing device (20) according to any of the preceding claims.

11. Stroke ring (40) having a groove (44) in which a sealing device (20) according to any of claims 1 to 9 is arranged.

12. Variable displacement pump comprising a stroke ring that can move in order to adjust the stroke of the variable displacement pump and that has a groove, and comprising a bearing ring, **characterised in that** a sealing device according to any of claims 1 to 9 is arranged in the groove such that the friction and/or wear element (21) is held so as to rest against the bearing ring by means of a preload of the elastically deformable sealing element (22).

## Revendications

1. Dispositif d'étanchéité avec un élément de friction et/ou d'usure (11; 21) oblong relativement indéformable et avec un élément d'étanchéité (12 ; 22) oblong déformable élastiquement qui repose selon la longueur contre l'élément de friction et/ou d'usure (11 ; 21), dans lequel l'élément de friction et/ou d'usure (21) entoure par ses extrémités l'élément d'étanchéité (22) et est réalisé en forme de U et de sorte que les extrémités (26, 27) de l'élément de friction et/ou d'usure (21) sont coudées respectivement dans un angle droit depuis le corps de base (24) oblong,
**caractérisé en ce que** l'élément d'étanchéité (22) s'appuie avec ses extrémités (31, 32) contre les extrémités coudées (26, 27) de l'élément de friction et/ou d'usure (21).

2. Dispositif d'étanchéité selon la revendication 1, **caractérisé en ce que** l'élément de friction et/ou d'usure (21) présente un corps de base oblong (24) comportant deux extrémités coudées (26, 27).

3. Dispositif d'étanchéité selon la revendication 2, **caractérisé en ce que** le corps de base oblong (24) présente une section transversale essentiellement rectangulaire.

4. Dispositif d'étanchéité selon la revendication 2 ou 3, **caractérisé en ce que** les extrémités coudées (26, 27) présentent respectivement une section transversale essentiellement rectangulaire.

5. Dispositif d'étanchéité selon l'une des revendications précédentes, **caractérisé en ce que** l'élément d'étanchéité (22) est relié sans possibilité de perte à l'élément de friction et/ou d'usure (21).

6. Dispositif d'étanchéité selon l'une des revendications précédentes, **caractérisé en ce que** l'élément d'étanchéité (22) est précontraint dans le sens longitudinal contre l'élément de friction et/ou d'usure (21).

7. Dispositif d'étanchéité selon l'une des revendications précédentes, **caractérisé en ce que** l'élément d'étanchéité (22) est relié à ses extrémités par liaison de matière et/ou complémentarité de forme à l'élément de friction et/ou d'usure (21).

8. Dispositif d'étanchéité selon l'une des revendications précédentes, **caractérisé en ce que** l'élément de friction et/ou d'usure (21) est conçu sous forme de profilé d'étanchéité.

9. Dispositif d'étanchéité selon l'une des revendications précédentes, **caractérisé en ce que** l'élément d'étanchéité (22) est conçu sous forme de cordon torique.

10. Elément de friction et/ou d'usure pour un dispositif d'étanchéité (20) selon l'une des revendications précédentes.

11. Anneau de levage (40) avec une rainure (44) dans laquelle un dispositif d'étanchéité (20) selon l'une des revendications 1 à 9 est agencé.

12. Pompe à débit variable avec un anneau de levage qui est mobile afin d'ajuster le levage de la pompe à débit variable et qui présente une rainure, et comportant une bague d'appui, **caractérisée en ce qu'**un dispositif d'étanchéité selon l'une des revendications 1 à 9 est agencé dans la rainure de sorte que l'élément de friction et/ou d'usure (21) est maintenu par une précontrainte de l'élément d'étanchéité (22) déformable élastiquement en appui contre la bague d'appui.
